# FASCICULE DE BREVET EUROPEEN

(11) **EP 0 786 875 B1**
(45) Date de publication et mention de la délivrance du brevet: **04.08.2004**
(21) Numéro de dépôt: 97400173.7
(22) Date de dépôt: 27.01.1997
(51) Int. Cl.: H04B 1/74

(54) **Transmission sécurisée de données sur N canaux normaux et au moins un canal de secours**
Geschützte Datenübertragung über N Normalkanäle und mindestens einen Schutzkanal
Secure data transmission over N normal channels and at least one security channel

(30) Priorité: 29.01.1996 FR 9600993
(43) Date de publication de la demande: 30.07.1997
(73) Titulaire: ALCATEL, 75008 Paris (FR)
(72) Inventeur: Szczepanowski, Serge, 95490 Vaureal (FR); Janer, Patrick, 92734 Nanterre Cedex (FR); Roubinet, Xavier, 92500 Rueil Malmaison (FR)
(74) Mandataire: Sciaux, Edmond

(56) Documents cités:
- US-A- 4 417 348
- US-A- 4 471 491
- US-A- 4 882 730

## Description

Le domaine de l'invention est celui de la transmission de données entre stations terminales, l'une étant dite station terminale d'émission et l'autre station terminale de réception. L'invention s'applique notamment, mais non exclusivement, à la transmission de données par faisceaux hertziens.

Plus précisément, l'invention concerne la sécurisation d'une telle transmission de données, par l'utilisation d'au moins un canal de secours en plus du ou des N canaux normaux, avec N ≥ 1. Le plus souvent, on utilise un canal de secours pour N canaux normaux.

La sécurisation de la transmission de données s'avère nécessaire dans tous les cas où la transmission peut être perturbée sur les canaux, cette perturbation induisant des erreurs de transmission. Par exemple, dans le cas d'une transmission de données par voie hertzienne, la transmission sur un canal peut être perturbée du fait des conditions atmosphériques, ou encore du fait de phénomènes de réflexions ou d'évanouissements (fading, en anglo-saxon). D'une façon générale, cette sécurisation consiste à utiliser un canal de secours à la place d'un canal normal (en général, celui qui est le plus perturbé).

Dans ce type de transmission de données sur canaux, les données transmises dans chacun des N canaux normaux, ainsi que celles transmises dans le canal de secours, comprennent généralement d'une part des données utiles et d'autre part des données d'exploitation.

Les données utiles (également appelées données nobles) sont par exemple fournies à la station terminale d'émission sous la forme de N voies nobles entrantes. Chaque voie noble entrante présente par exemple un débit de 34 Mbits/s.

Les données d'exploitation (également appelées données de service) sont notamment des données liées aux différents protocoles mis en oeuvre pour la transmission. Elles sont par exemple fournies à la station terminale d'émission sous la forme de N voies de service entrantes.

Chacune des N voies de service entrantes est associée à une des N voies nobles entrantes. La station terminale d'émission comporte donc généralement N couples d'entrées comprenant chacun une entrée de données utiles et une entrée de données d'exploitation. Les données utiles et les données d'exploitation appliquées sur les deux entrées d'un même couple d'entrées sont émises par la station terminale d'émission sur l'un des N canaux normaux, et éventuellement sur le canal de secours. En d'autres termes, les données d'une voie de service entrante sont multiplexées avec les données de la voie noble entrante associée, de façon à être transmises dans un même canal, sous la forme d'un train tramé de données.

De même, la station terminale de réception comporte généralement N couples de sorties comprenant chacun une sortie de données utiles et une sortie de données d'exploitation. Les données disponibles sur les deux sorties d'un même couple de sorties sont des données utiles et des données d'exploitation reçues par la station terminale de réception sur un même canal normal, et éventuellement sur le canal de secours.

Dans l'état de la technique, pour tous les systèmes de transmission de données du type discuté ci-dessus, la sécurisation de la transmission de données consiste à effectuer les étapes successives suivantes :
- dans la station terminale d'émission :
   * on aiguille les données utiles de l'un des N canaux normaux (dit canal normal secouru) vers le canal de secours, puis
   * sur chacun des N canaux normaux et sur le canal de secours, on multiplexe des données d'exploitation avec les données utiles ;
- dans la station terminale de réception :
   * sur chacun des N canaux normaux et sur le canal de secours, on démultiplexe les données utiles et les données d'exploitation, puis
   * on commute les données utiles du canal de secours avec les données utiles du canal normal secouru.

Cette technique connue de sécurisation de la transmission de données présente l'inconvénient de ne permettre que la sécurisation des données utiles, puisque l'aiguillage vers le canal de secours est effectué avant le multiplexage des données utiles avec les données d'exploitation. Par conséquent, la sécurisation des données d'exploitation nécessite la mise en oeuvre de moyens supplémentaires, qui sont complexes et coûteux.

Par ailleurs, lorsque la distance entre la station terminale d'émission et la station terminale de réception est trop grande, on utilise une ou plusieurs stations relais de réception/réémission. La transmission sécurisée de données présente alors non plus un mais plusieurs bonds de transmission. Chaque bond de transmission est réalisé sur N portions de canal normal, avec N ≥ 1, et au moins une portion de canal de secours.

Ainsi, dans le cas d'une transmission par voie hertzienne, chaque bond de transmission correspond par exemple à une distance d'environ 50 km. Une station relais est alors placée tous les 50 km entre la station terminale d'émission et la station terminale de réception.

Dans le cas d'une telle transmission multibond, c'est toujours la technique connue précitée de sécurisation qui est mise en oeuvre dans la station terminale d'émission et dans la station terminale de réception.

Pour ce qui est des étapes effectuées dans les stations relais, on connaît deux principales techniques de sécurisation.

Une première technique connue de sécurisation de la transmission de données, dite de commutation par tronçon, consiste à commuter un canal normal sur le canal de secours sur tout le tronçon de transmission reliant la station terminale d'émission à la station terminale de réception. L'ensemble du tronçon de transmission, c'est-à-dire tous les bonds formant ce tronçon, est alors sécurisé en bloc. En d'autres termes, toutes les portions successives du canal de secours (qui correspondent aux bonds successifs du tronçon) servent à secourir toutes les portions successives d'un même canal normal. Dans ce cas, on utilise les stations relais uniquement pour regénérer les données utiles et les données d'exploitation multiplexées dans chaque canal, et éventuellement pour insérer ou extraire des données d'exploitation.

Cette première technique connue est simple à mettre en oeuvre. En revanche, elle conduit à une sous-utilisation de la transmission multibond. En effet, même si une seule portion (c'est-à-dire un seul bond) d'un canal normal est perturbé, toutes les portions de ce canal normal sont néanmoins secourues. En d'autres termes, certaines portions du canal de secours sont utilisées pour secourir des portions d'un canal normal qui ne sont pas perturbées, tandis que des portions d'un autre canal normal peuvent être perturbées mais ne sont pas secourues.

Afin d'utiliser de façon optimale la transmission multibonds, il conviendrait de sécuriser les bonds indépendamment les uns des autres. Dans ce but, une seconde technique connue de sécurisation de la transmission de données, dite de commutation par bond, consiste à commuter, sur chaque bond de transmission, la portion de canal normal la plus perturbée de ce bond sur la portion de canal de secours de ce bond.

L'avantage d'une liaison avec commutation bond par bond est qu'elle offre une meilleure disponibilité. En revanche, sa mise en oeuvre dans toutes les stations relais est très lourde en nombre de traitements à réaliser et donc en nombre de cartes.

On connaît dans l'état de la technique deux façons de mettre en oeuvre une telle commutation par bond.

La première façon connue consiste à utiliser, dans chaque station relais, deux terminaux dos à dos avec commutation en bande de base. Cette première solution, généralement mise en oeuvre dans le cas d'une transmission du type N + 1 (N canaux normaux et 1 canal de secours), présente l'inconvénient d'imposer dans chaque station relais :
- un retour en bande de base (généralement par justification) ;
- un démultiplexage des trains tramés sur chacun desquels sont multiplexées une voie noble (données utiles) et une voie de service (données d'exploitation) ;
- une commutation séparée et sans erreur des voies nobles et de service démultiplexées ;
- une justification de ces voies nobles et de service ; et
- un multiplexage des voies nobles et de service justifiées, en vue de leur émission.

La seconde façon connue de mettre en oeuvre une commutation par bond consiste à utiliser, dans chaque station relais, des cartes dites de diversité qui commutent sur des trains tramés. Cette seconde solution, généralement mise en oeuvre dans le cas d'une transmission du type 1 + 1, présente l'inconvénient d'être difficilement applicable avec une transmission du type N' + 1, avec N' > 1. En effet, les deux trains tramés à commuter dans chaque station relais (à savoir celui du canal normal et celui du canal de secours) sont justifiés avec des horloges différentes et des bases de temps indépendantes. En d'autres termes, le canal normal et le canal de secours subissent chacun un traitement plésiochrone et indépendant. Par conséquent, la commutation effectuée dans chaque station relais provoque des erreurs, voire des pertes de synchronisation.

L'invention a notamment pour objectif de pallier ces différents inconvénients de l'état de la technique.

Plus précisément, un des objectifs de la présente invention est de fournir un procédé de transmission sécurisée de données sur N canaux normaux, avec N ≥ 1, et au moins un canal de secours, entre une station terminale d'émission et une station terminale de réception, ce procédé permettant de réduire, par rapport aux procédés connus discutés ci-dessus, la complexité du matériel utilisé pour sa mise en oeuvre.

L'invention a également pour objectif de fournir un tel procédé pouvant être mis en oeuvre avec une transmission du type 1 + 1 comme avec une transmission du type N' + 1, avec N' > 1.

Un objectif complémentaire de l'invention est de fournir un tel procédé qui, dans le cas d'une transmission multibonds, permette une utilisation optimale de tous les bonds, tout en ne nécessitant qu'un matériel peu complexe.

Un autre objectif de l'invention est de fournir un tel procédé qui permette de sécuriser de façon simple les données utiles comme les données d'exploitation.

Ces différents objectifs, ainsi que d'autres qui apparaîtront par la suite, sont atteints selon l'invention à l'aide d'un procédé de transmission sécurisée de données sur N canaux normaux, avec N ≥ 1, et au moins un canal de secours, entre une station terminale d'émission et une station terminale de réception, les données transmises comprenant d'une part des données utiles et d'autre part des données d'exploitation, ladite station terminale d'émission comportant N couples d'entrées comprenant chacun une entrée de données utiles et une entrée de données d'exploitation, les données utiles et les données d'exploitation appliquées sur les deux entrées d'un même couple d'entrées étant émises par la station terminale d'émission sur un même canal normal et éventuellement sur le canal de secours, ladite station terminale de réception comportant N couples de sorties comprenant chacun une sortie de données utiles et une sortie de données d'exploitation, les données disponibles sur les deux sorties d'un même couple de sorties étant des données utiles et des données d'exploitation reçues par la station terminale de réception sur un même canal normal et éventuellement sur le canal de secours,
ce procédé étant caractérisé en ce que, dans ladite station terminale d'émission, on effectue les étapes successives suivantes :
- sur chacun des N canaux normaux, on multiplexe les données utiles et les données d'exploitation appliquées sur l'un des N couples d'entrées ;
- on aiguille les données multiplexées de l'un des N canaux normaux, dit canal normal secouru, vers le canal de secours ;
et en ce que, dans ladite station terminale de réception, on effectue les étapes successives suivantes :
- on commute les données multiplexées du canal de secours avec les données multiplexées du canal normal secouru ;
- sur chacun des N canaux normaux, on démultiplexe les données utiles et les données d'exploitation, afin de les rendre disponibles sur l'un desdits N couples de sorties.

Ainsi, le principe général de l'invention consiste à aiguiller (à l'émission) et commuter (en réception) non pas uniquement les données utiles (voies nobles), comme dans les procédés connus de l'état de la technique, mais les données utiles (voies nobles) multiplexées avec les données d'exploitation (voies de service). En d'autres termes, l'opération d'aiguillage (à l'émission) et celle de commutation (en réception) sont effectuées sur les données multiplexées du train tramé.

Le principe général de l'invention peut être mis en oeuvre qu'il y ait un seul ou plusieurs canaux normaux (c'est-à-dire avec une transmission du type 1 + 1 ou N' + 1).

De plus, le muliplexage étant effectué, à l'émission, avant l'aiguillage, toutes les données (utiles et d'exploitation) des voies nobles et de service sont sécurisées avec un seul organe d'aiguillage. De même, en réception, le muliplexage étant effectué après la commutation, un seul organe de commutation est nécessaire pour la sécurisation de toutes les données.

Il est également à noter que le procédé de l'invention permet une commutation sans erreur des canaux. En effet, on émet les mêmes données multiplexées sur le canal normal secouru et sur le canal de secours, sans repasser en bande de base et sans synchronisation entre le canal normal secouru et le canal de secours.

Avantageusement, ledit canal normal secouru est le canal normal qui présente la moins bonne qualité de transmission.

Préférentiellement, ladite étape de commutation effectuée dans la station terminale de réception consiste à copier les données multiplexées du canal de secours dans ledit canal normal secouru, seulement si la qualité de transmission du canal de secours est meilleure que celle du canal normal secouru.

Dans un mode de réalisation particulier de l'invention, ladite transmission sécurisée de données étant du type présentant au moins deux bonds de transmission du fait de l'utilisation d'au moins une station relais entre la station terminale d'émission et la station terminale de réception, chaque bond de transmission étant réalisé sur N portions de canal normal, avec N ≥ 1, et au moins une portion de canal de secours,
chaque station relais recevant des données sur N portions entrantes de canal normal et au moins une portion entrante de canal de secours d'un bond de transmission précédent, et réémettant les données reçues sur N portions sortantes de canal normal et au moins une portion sortante de canal de secours d'un bond de transmission suivant,
le procédé étant caractérisé en ce que, dans ladite station relais, on effectue les étapes successives suivantes :
   - on commute les données multiplexées de la portion entrante de canal de secours avec les données multiplexées de l'une des N portions entrantes de canal normal, dite portion entrante secourue de canal normal, de façon à obtenir lesdites N portions sortantes de canal normal ;
   - on aiguille les données multiplexées de l'une des N portions sortantes de canal normal, dite portion sortante secourue de canal normal, vers la portion sortante de canal de secours.

Dans ce cas, le procédé de l'invention permet une commutation bond par bond, tout en conservant les avantages précités. En effet, les données nobles et les données d'exploitation étant multiplexées (c'est-à-dire tramées) en amont, la commutation est réalisée par bond sur des trains tramés.

Le procédé de l'invention permet un gain d'un degré de liberté, par rapport à une commutation par tronçon, du fait de l'indépendance des bonds les uns par rapport aux autres. En d'autres termes, on optimise l'utilisation de tous les bonds du canal de secours, puisque chaque portion du canal de secours permet de secourir une portion de l'un quelconque des canaux normaux.

Avantageusement, ladite portion entrante, respectivement sortante, secourue de canal normal est la portion entrante, respectivement sortante, de canal normal qui présente la moins bonne qualité de transmission.

Préférentiellement, ladite étape de commutation effectuée dans la station relais consiste à copier les données multiplexées de la portion entrante de canal de secours dans la portion entrante secourue de canal normal, seulement si la qualité de transmission de la portion entrante de canal de secours est meilleure que celle de la portion entrante secourue de canal normal.

De facon préférentielle, ladite transmission sécurisée de données entre la station terminale d'émission et la station terminale de réception est une transmission par voie hertzienne.

L'invention concerne également une station terminale d'émission du type précité, cette station terminale d'émission comprenant :
- des moyens de multiplexage, sur chacun des N canaux normaux, des données utiles et des données d'exploitation appliquées sur l'un des N couples d'entrées ;
- des moyens d'aiguillage des données multiplexées de l'un des N canaux normaux, dit canal normal secouru, vers le canal de secours.

De cette façon, à l'émission, l'opération de multiplexage précède celle d'aiguillage. Ceci permet de sécuriser en une seule fois toutes les données (utiles et d'exploitation).

L'invention concerne encore une station terminale de réception du type précité, cette station terminale de réception comprenant :
- des moyens de commutation des données multiplexées du canal de secours avec les données multiplexées de l'un des N canaux normaux, dit canal normal secouru ;
- des moyens de démultiplexage, sur chacun des N canaux normaux, des données utiles et des données d'exploitation, afin de les rendre disponibles sur l'un desdits N couples de sortie.

De cette façon, en réception, l'opération de démultiplexage suit celle de commutation.

Enfin, l'invention concerne aussi un système de communication comprenant une station relais du type précité, cette station relais comprenant :
- des moyens de commutation des données multiplexées de la portion entrante de canal de secours avec les données multiplexées de l'une des N portions entrantes de canal normal, de façon à obtenir lesdites N portions sortantes de canal normal ;
- des moyens d'aiguillage des données multiplexées de l'une des N portions sortantes de canal normal vers la portion sortante de canal de secours et une station terminale d'émission et une station terminale de réception comme décrit ci-dessus.

Ainsi, aucune opération de multiplexage / démultiplexage n'est nécessaire dans les stations relais.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon schématique un premier exemple de transmission de données entre une station terminale d'émission et une station terminale de réception, dont la sécurisation peut être assurée par la mise en oeuvre d'un premier mode de réalisation du procédé de l'invention ;
- les figures 2 et 3 présentent chacune un schéma simplifié d'un premier mode de réalisation d'une station terminale, d'émission et de réception respectivement, permettant la mise en oeuvre du premier mode de réalisation du procédé de l'invention ;
- la figure 4 présente de façon schématique un second exemple de transmission de données, du type multibonds, dont la sécurisation peut être assurée par la mise en oeuvre d'un second mode de réalisation du procédé de l'invention ;
- les figures 5 et 6 présentent chacune un schéma simplifié d'un second mode de réalisation d'une station terminale, d'émission et de réception respectivement, permettant la mise en oeuvre du second mode de réalisation du procédé de l'invention ;
- la figure 7 présente un schéma simplifié d'un mode de réalisation particulier d'une station relais permettant la mise en oeuvre du second mode de réalisation du procédé de l'invention ;
- les figures 8 et 9 présentent chacune un diagramme simplifié d'étapes du procédé de l'invention effectuées respectivement dans une station terminale d'émission et dans une station terminale de réception ;
- la figure 10 présente un diagramme simplifié d'étapes du procédé de l'invention effectuées dans une station relais.

L'invention concerne donc un procédé de transmission sécurisée de données sur N canaux normaux, avec N ≥ 1, et au moins un canal de secours, entre une station terminale d'émission et une station terminale de réception.

L'invention s'applique notamment, mais non exclusivement, aux transmissions hertziennes. Par ailleurs, il est à noter que la transmission peut être bilatérale, chaque station terminale assurant à la fois les fonctions d'émission et de réception. Toutefois, afin de faciliter la compréhension de l'invention, dans la suite de la description, on décrit uniquement une transmission unilatérale entre une station terminale d'émission et une station terminale de réception. Il est clair toutefois que l'invention n'est pas limitée à ce type de transmission et s'applique également dans le cas d'une transmission bilatérale entre deux stations terminales d'émission/réception.

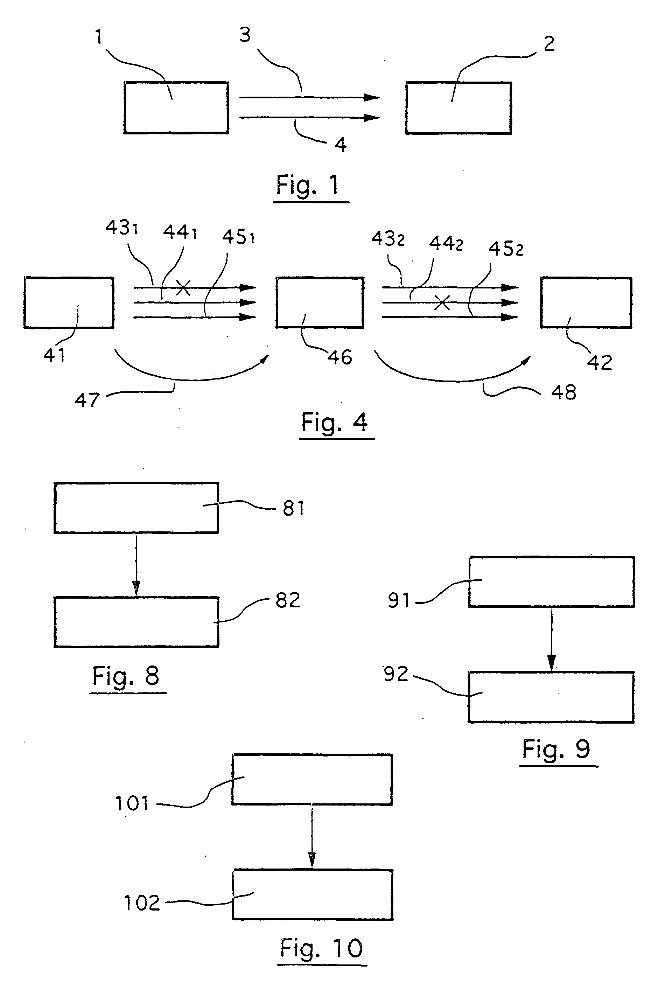

La figure 1 présente de façon schématique un premier exemple d'une transmission de données entre une station terminale d'émission 1 et une station terminale de réception 2, sur un canal normal 3 et un canal de secours 4 (transmission de type 1 + 1).

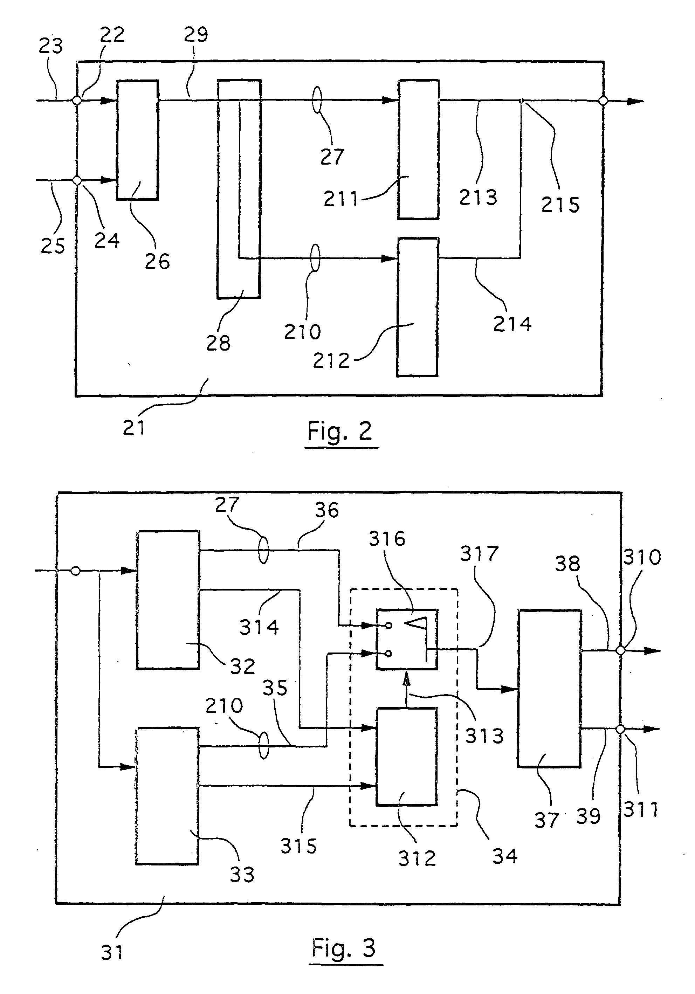

La sécurisation d'une telle transmission, du type monobond et 1 + 1, peut être assurée par la mise en oeuvre d'un premier mode de réalisation du procédé de l'invention. Ce premier mode de réalisation du procédé de l'invention est présenté en relation avec les figures 2, 3, 8 et 9.

Comme présenté sur la figure 2, dans ce premier mode de réalisation, la station terminale d'émission 21 comprend :
- un couple d'entrées comprenant une entrée 22 de données utiles 23 et une entrée 24 de données d'exploitation 25 ;
- des moyens 26 de multiplexage, sur le canal normal 27, des données utiles 23 et des données d'exploitation 25 appliquées sur le couple d'entrées 22, 24 ;
- des moyens 28 d'aiguillage des données multiplexées 29 du canal normal 27 vers le canal de secours 210 ;
- des moyens 211, 212 d'émission, sur le canal normal 27 et sur le canal de secours 210, des données multiplexées 29.

Dans cet exemple, les signaux de sorties 213, 214 des moyens 211, 212 d'émission sont sommés (215) de manière fréquentielle.

Comme présenté sur la figure 8, dans ce premier mode de réalisation, on effectue notamment les étapes successives suivantes dans la station terminale d'émission 21 : sur le canal normal, on multiplexe (81) les données utiles 23 et les données d'exploitation 25 appliquées sur le couple d'entrées 22, 24 ; puis, on aiguille (82) les données multiplexées 29 du canal normal 27 vers le canal de secours 210.

Comme présenté sur la figure 3, dans ce premier mode de réalisation, la station terminale de réception 31 comprend :
- des moyens 32, 33 de réception, sur le canal normal 27 et sur le canal de secours 210, des données multiplexées émises par la station terminale d'émission 21 ;
- des moyens 34 de commutation des données multiplexées 35 du canal de secours 210 avec les données multiplexées 36 du canal normal 27 ;
- des moyens 37 de démultiplexage des données multiplexées 317 présentes sur le canal normal en sortie des moyens 34 de commutation (à savoir, soit les données multiplexées 35 du canal de secours 210, soit les données multiplexées 36 du canal normal 27), de façon à séparer les données utiles 38 et les données d'exploitation 39 ;
- un couple de sorties comprenant une sortie 310 pour les données utiles 38 et une sortie 311 pour les données d'exploitation 39.

Les moyens 34 de commutation comprennent, dans ce mode de réalisation :
- un circuit logique 312 de commutation à la réception, générant une commande 313 de choix de canal, en fonction d'informations 314, 315 sur la qualité de réception du canal normal et du canal de secours, fournies par les moyens 32, 33 de réception ;
- des moyens 316 de sélection des données multiplexées 36 du canal normal 27 ou de celles 35 du canal de secours 210, en fonction de la commande 313 de choix de canal.

Ainsi, en sortie des moyens 316 de sélection, le canal normal 27 contient des données multiplexées 317 qui sont soit celles 36 qu'il contenait avant la commutation, soit celles 35 que contenait le canal de secours 210. Le circuit logique 312 génère une commande 313 de choix correspondant à celui des deux canaux 27, 210 qui présente la meilleure qualité de transmission.

Comme présenté sur la figure 9, dans ce premier mode de réalisation, on effectue notamment les étapes successives suivantes dans la station terminale de réception 31 : on commute (91) les données multiplexées 35 du canal de secours 210 avec les données multiplexées 36 du canal normal 27 ; puis, sur le canal normal 27, on démultiplexe (92) les données utiles 38 et les données d'exploitation 39, afin de les rendre disponibles sur le couple de sorties 310, 311.

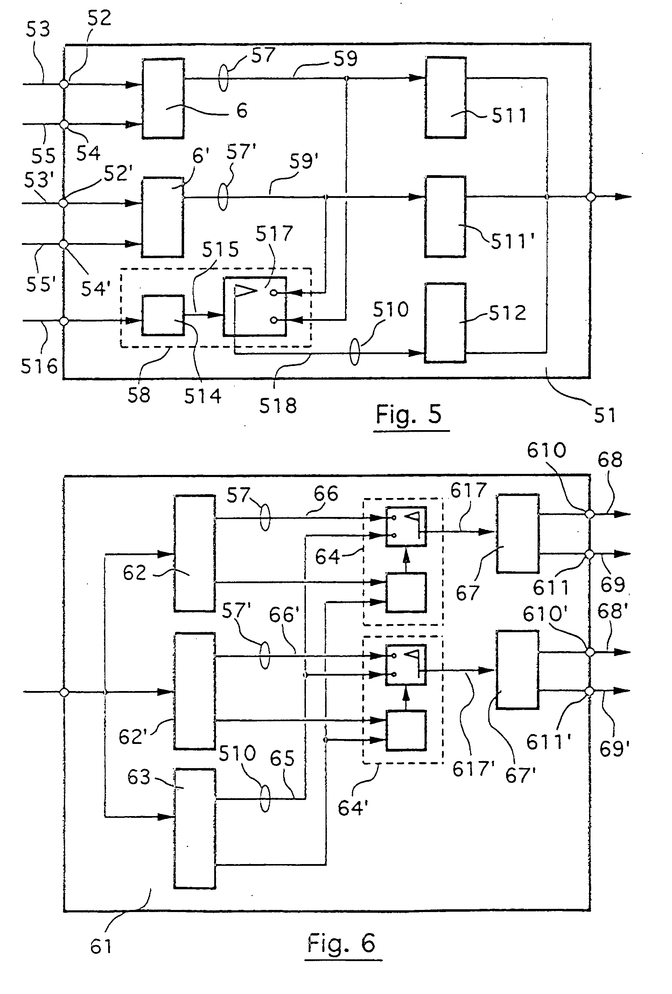

La figure 4 présente de façon schématique un second exemple de transmission de données entre une station terminale d'émission 41 et une station terminale de réception 42. Ce second exemple de transmission de données se distingue du premier présenté ci-dessus sur deux points.

Tout d'abord, la transmission est du type 2 + 1, au lieu de 1 + 1. En effet, la transmission est effectuée sur deux canaux normaux 43, 44 et un canal de secours 45.

Il est clair que ce second mode de réalisation, décrit ici avec une transmission du type 2 + 1, peut aisément être adapté à toute transmission du type N' + 1, avec N' ≥ 2.

Par ailleurs, la transmission est du type multibonds au lieu de monobond. En effet, la station terminale d'émission 41 est reliée à la station terminale de réception 42 par l'intermédiaire d'au moins une station relais 46 de réception / réémission. D'une façon générale, un bond de transmission existe soit entre la station terminale d'émission 41 et une station relais 46, soit entre deux stations relais 46, soit entre une station relais 46 et la station terminale de réception 42. Chaque bond 47, 48 est effectué sur N' portions de canal normal 43₁, 44₁, 43₂, 44₂ et une portion de canal de secours 45₁, 45₂.

Les bonds 47, 48 sont sécurisés indépendamment les uns des autres. Ainsi, dans l'exemple de la figure 4, sur le premier bond 47, c'est la portion 43₁ du premier canal 43 qui est secourue par la portion 45₁ du canal de secours 45, alors que sur le second bond 48, c'est la portion 44₂ du second canal 44 qui est secourue par la portion 45₂ du canal de secours 45. Les portions secourues 43₁, 44₂ sont marquées d'une croix.

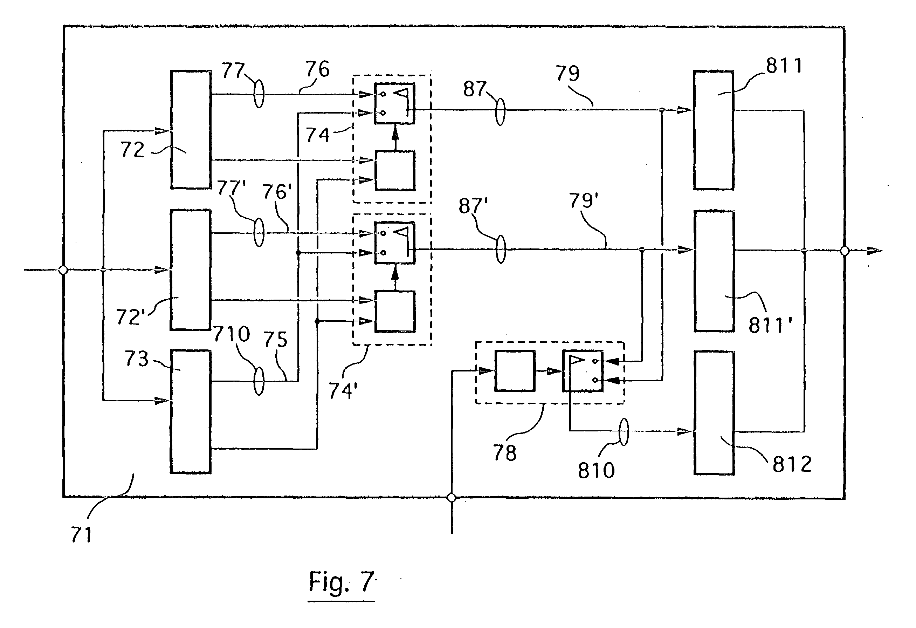

Comme expliqué plus en détail dans la suite de cette description, ces deux caractéristiques distinctives (N' + 1 et multibonds) induisent, pour ce qui est de la pluralité de canaux normaux, des modifications dans les moyens d'aiguillage compris dans la station terminale d'émission 41, et, pour ce qui est de la pluralité de bonds, la présence d'une ou plusieurs stations relais 46 (dont la structure et le fonctionnement sont présentés en relation avec les figures 7 et 10).

La sécurisation d'une telle transmission, du type multibond et N' + 1, peut être assurée par la mise en oeuvre d'un second mode de réalisation du procédé de l'invention. Ce second mode de réalisation du procédé de l'invention est présenté en relation avec les figures 4 à 10.

Comme présenté sur la figure 5, dans ce second mode de réalisation, la station terminale d'émission 51 comprend :
- deux couples d'entrées comprenant chacun une entrée 52, 52' de données utiles 53, 53' et une entrée 54, 54' de données d'exploitation 55, 55' ;
- des moyens 26, 26' de multiplexage, sur chaque canal normal 57, 57', des données utiles 53, 53' et des données d'exploitation 55, 55' appliquées sur l'un des couples d'entrées (52, 54), (52', 54') ;
- des moyens 58 d'aiguillage des données multiplexées 59, 59' de l'un des canaux normaux 57, 57' (dit canal normal secouru) vers le canal de secours 510 ;
- des moyens 511, 511', 512 d'émission, sur les deux canaux normaux 57, 57' et sur le canal de secours 510, des données multiplexées 59, 59'.

Avec ce second mode de réalisation, on effectue notamment les étapes successives suivantes dans la station terminale d'émission (cf Fig.8) : sur chaque canal normal 57, 57', on multiplexe (81) les données utiles 53, 53' et les données d'exploitation 55, 55' appliquées sur l'un des couples d'entrées (52, 54), (52', 54') ; puis, on aiguille (82) les données multiplexées 59, 59' de l'un des canaux normaux 57, 57' (dit canal normal secouru) vers le canal de secours 510.

Les moyens 58 d'aiguillage comprennent, dans ce second mode de réalisation :
- un circuit logique 514 de commutation à l'émission, générant une commande 515 de choix de canal, en fonction d'une information 516 sur la qualité de transmission des différents canaux normaux 57, 57', fournie par la station terminale de réception (par une voie retour non représentée) ;
- des moyens 517 de sélection des données multiplexées 59, 59' de l'un des canaux normaux, en fonction de la commande 515 de choix de canal.

Ainsi, en sortie des moyens 58 d'aiguillage, le canal de secours 510 contient des données multiplexées 518 qui sont soit celles 59 du premier canal normal 57, soit celles 59' du second canal normal 57. Le circuit logique 514 génère une commande 515 de choix correspondant à celui des deux canaux normaux 57, 57' qui présente la moins bonne qualité de transmission.

Comme présenté sur la figure 6, dans ce second mode de réalisation, la station terminale de réception 61 comprend :
- des moyens 62, 62', 63 de réception, sur chacun des canaux normaux 57, 57' et sur le canal de secours 510, des données multiplexées émises par la station terminale d'émission 51 ;
- des moyens 64, 64' de commutation, sur chacun des canaux normaux 57, 57', des données multiplexées 65 du canal de secours 510 avec les données multiplexées 66, 66' de ce canal normal 57, 57'. Seuls les moyens de commutation de l'un des deux canaux normaux (à savoir ceux du canal normal secouru) sont actifs et réalisent effectivement la commutation pour laquelle ils sont prévus ;
- des moyens 67, 67' de démultiplexage, sur chacun des canaux normaux 57, 57', des données multiplexées 617, 617' présentes sur ce canal normal 57, 57' en sortie des moyens 64, 64' de commutation (à savoir, soit les données multiplexées 65 du canal de secours 510, soit les données multiplexées 66, 66' de ce canal normal 57, 57'), de façon à séparer les données utiles 68, 68' et les données d'exploitation 69, 69' ;
- deux couples de sorties comprenant chacun une sortie 610, 610' pour les données utiles 68, 68' et une sortie 611, 611' pour les données d'exploitation 69, 69'.

Les moyens 64, 64' de commutation sur chaque canal normal 57, 57' sont du type de ceux présentés ci-dessus en relation avec la figure 3. Ainsi, après commutation, chaque canal normal 57, 57' contient des données multiplexées 617, 617' qui sont soit celles 66, 66' qu'il contenait avant la commutation, soit celles 65 que contenait le canal de secours 510.

Avec ce second mode de réalisation, on effectue notamment les étapes successives suivantes dans la station terminale de réception (cf Fig.9) : on commute (91) les données multiplexées 65 du canal de secours 510 avec les données multiplexées 66, 66' du canal normal secouru 27 ou 27' ; puis, sur chacun des canaux normaux 57, 57', on démultiplexe (92) les données utiles 68, 68' et les données d'exploitation 69, 69', afin de les rendre disponibles sur les deux couples de sorties (610, 611), (610', 611').

La figure 7 présente un schéma simplifié d'un mode de réalisation particulier d'une station relais 71 permettant la mise en oeuvre du second mode de réalisation du procédé de l'invention.

D'une façon générale, chaque station relais 71 reçoit des données et les réémet. Dans le cas présenté d'une transmission multibonds du type 2 + 1, chaque station relais reçoit des données sur deux portions entrantes de canal normal 77, 77' et une portion entrante de canal de secours 710 (bond de transmission en amont de la station relais). Elle réémet les données reçues sur deux portions sortantes de canal normal 87, 87' et une portion sortante de canal de secours 810 (bond de transmission en aval de la station relais).

Dans le mode de réalisation présenté, la station relais 71 comprend :
- des moyens 72, 72', 73 de réception, sur chacune des portions entrantes de canal normal 77, 77' et sur la portion entrante de canal de secours 710, des données multiplexées émises soit par la station terminale d'émission 51, soit par une autre station relais ;
- des moyens 74, 74' de commutation, sur chacune des portions entrantes de canal normal 77, 77', des données multiplexées 75 de la portion entrante de canal de secours 710 avec les données multiplexées 76, 76' de cette portion entrante de canal normal 77, 77'. Seuls les moyens de commutation de l'une des deux portions entrantes de canal normal 77, 77' (à savoir ceux de la portion entrante secourue de canal normal) sont actifs et réalisent effectivement la commutation pour laquelle ils sont prévus. Les deux portions entrantes de canal normal 77, 77' constituent, après commutation, les deux portions sortantes de canal normal 87, 87' ;
- des moyens 78 d'aiguillage des données multiplexées 79, 79' de l'une des deux portions sortantes de canal normal 87, 87' (dite portion sortante secourue de canal normal) vers la portion sortante de canal de secours 810 ;
- des moyens 811, 811', 812 d'émission, sur les deux portions sortantes de canal normal 87, 87' et sur la portion sortante de canal de secours 810, des données multiplexées 79, 79'.

Comme présenté sur la figure 10, on effectue notamment les étapes successives suivantes dans la station relais 71 :
- on commute (101) les données multiplexées de la portion entrante de canal de secours 75 avec les données multiplexées 76, 76' de l'une des deux portions entrantes de canal normal 77, 77', dite portion entrante secourue de canal normal, de façon à obtenir les deux portions sortantes de canal normal 87, 87';
- on aiguille (102) les données multiplexées 79, 79' de l'une des deux portions sortantes de canal normal 87, 87', dite portion sortante secourue de canal normal, vers la portion sortante de canal de secours 810.

Les moyens 74, 74' de commutation sont du même type que ceux 64, 64' de la station terminale de réception de la figure 6. Les moyens 78 d'aiguillage sont du même type que ceux 58 de la station terminale d'émission de la figure 5.

Il est clair que de nombreux autres modes de réalisation du procédé de l'invention, ainsi que de la station terminale d'émission, de la station terminale de réception et de la station relais, peuvent être envisagés sans sortir de l'étendue des revendications ci-annexées. On peut notamment prévoir une transmission du type 1 + 1 et multibonds, ou encore une transmission monobond et du type N' + 1, avec N' > 1.

## Revendications

1. Procédé de transmission sécurisée de données sur N canaux normaux, avec N ≥ 1, et au moins un canal de secours, entre une station terminale d'émission et une station terminale de réception, les données transmises comprenant d'une part des données utiles et d'autre part des données d'exploitation,
ladite station terminale d'émission (1 ; 21 ; 41 ; 51) comportant N couples d'entrées comprenant chacun une entrée (22 ; 52, 52') de données utiles (23 ; 53, 53') et une entrée (24 ; 54, 54') de données d'exploitation (25 ; 55, 55'), les données utiles et les données d'exploitation appliquées sur les deux entrées d'un même couple d'entrées étant émises par la station terminale d'émission sur un même canal normal (27 ; 57, 57') et éventuellement sur le canal de secours (210 ; 510),
ladite station terminale de réception (2 ; 31 ; 42 ; 61) comportant N couples de sorties comprenant chacun une sortie (310 ; 610, 610') de données utiles (38 ; 68, 68') et une sortie (311 ; 611, 611') de données d'exploitation (39 ; 69, 69'), les données disponibles sur les deux sorties d'un même couple de sorties étant des données utiles et des données d'exploitation reçues par la station terminale de réception sur un même canal normal (27 ; 57, 57') et éventuellement sur le canal de secours (210 ; 510),
**caractérisé en ce que**, dans ladite station terminale d'émission (1 ; 21 ; 41 ; 51), on effectue les étapes successives suivantes :
- sur chacun des N canaux normaux, on multiplexe (81) les données utiles et les données d'exploitation appliquées sur l'un des N couples d'entrées ;
- on aiguille (82) les données multiplexées de l'un des N canaux normaux, dit canal normal secouru, vers le canal de secours ;
et **en ce que**, dans ladite station terminale de réception (2 ; 31 ; 42 ; 61), on effectue les étapes successives suivantes :
- on commute (91) les données multiplexées du canal de secours avec les données multiplexées du canal normal secouru ;
- sur chacun des N canaux normaux, on démultiplexe (92) les données utiles et les données d'exploitation, afin de les rendre disponibles sur l'un desdits N couples de sorties.

2. Procédé selon la revendication 1, **caractérisé en ce que** ledit canal normal secouru est le canal normal qui présente la moins bonne qualité de transmission.

3. Procédé selon l'une quelconque des revendications 1 et 2, **caractérisé en ce que** ladite étape (91) de commutation effectuée dans la station terminale de réception consiste à copier les données multiplexées du canal de secours dans ledit canal normal secouru, seulement si la qualité de transmission du canal de secours est meilleure que celle du canal normal secouru.

4. Procédé selon l'une quelconque des revendications 1 à 3, ladite transmission sécurisée de données étant du type présentant au moins deux bonds de transmission (47, 48) du fait de l'utilisation d'au moins une station relais (46 ; 71) entre la station terminale d'émission (41) et la station terminale de réception (42), chaque bond de transmission étant réalisé sur N portions de canal normal (43₁, 44₁, 43₂, 44₂), avec N ≥ 1, et au moins une portion de canal de secours (45₁, 45₂),
chaque station relais recevant des données sur N portions entrantes de canal normal (77, 77') et au moins une portion entrante de canal de secours (710) d'un bond de transmission précédent (47), et réémettant les données reçues sur N portions sortantes de canal normal (87, 87') et au moins une portion sortante de canal de secours (810) d'un bond de transmission suivant (48),
**caractérisé en ce que**, dans ladite station relais (46 ; 71), on effectue les étapes successives suivantes :
- on commute (101) les données multiplexées de la portion entrante de canal de secours avec les données multiplexées de l'une des N portions entrantes de canal normal, dite portion entrante secourue de canal normal, de façon à obtenir lesdites N portions sortantes de canal normal ;
- on aiguille (102) les données multiplexées de l'une des N portions sortantes de canal normal, dite portion sortante secourue de canal normal, vers la portion sortante de canal de secours.

5. Procédé selon la revendication 4, **caractérisé en ce que** ladite portion entrante secourue de canal normal est la portion entrante de canal normal qui présente la moins bonne qualité de transmission.

6. Procédé selon l'une quelconque des revendications 4 et 5, **caractérisé en ce que** ladite portion sortante secourue de canal normal est la portion sortante de canal normal qui présente la moins bonne qualité de transmission.

7. Procédé selon l'une quelconque des revendications 4 à 6, **caractérisé en ce que** ladite étape (101) de commutation effectuée dans la station relais consiste à copier les données multiplexées de la portion entrante de canal de secours dans la portion entrante secourue de canal normal, seulement si la qualité de transmission de la portion entrante de canal de secours est meilleure que celle de la portion entrante secourue de canal normal.

8. Procédé selon l'une quelconque des revendications 1 à 7, **caractérisé en ce que** ladite transmission sécurisée de données entre la station terminale d'émission et la station terminale de réception est une transmission par voie hertzienne.

9. Station terminale d'émission (1 ; 21 ; 41 ; 51) du type destinée à coopérer avec une station terminale de réception afin de permettre une transmission sécurisée de données sur N canaux normaux, avec N ≥ 1, et au moins un canal de secours, les données transmises comprenant d'une part des données utiles et d'autre part des données d'exploitation,
ladite station terminale d'émission comportant N couples d'entrées comprenant chacun une entrée de données utiles et une entrée de données d'exploitation, les données utiles et les données d'exploitation appliquées sur les deux entrées d'un même couple d'entrées étant émises par la station terminale d'émission sur un même canal normal et éventuellement sur le canal de secours,
**caractérisée en ce qu'**elle comprend :
- des moyens (26 ; 56, 56') de multiplexage, sur chacun des N canaux normaux, des données utiles et des données d'exploitation appliquées sur l'un des N couples d'entrées ;
- des moyens (28 ; 58) d'aiguillage des données multiplexées de l'un des N canaux normaux, dit canal normal secouru, vers le canal de secours.

10. Station terminale de réception (2 ; 31 ; 42 ; 61) du type destinée à coopérer avec une station terminale d'émission afin de permettre une transmission sécurisée de données sur N canaux normaux, avec N >= 1, et au moins un canal de secours, les données transmises comprenant d'une part des données utiles et d'autre part des données d'exploitation,
ladite station terminale de réception comportant N couples de sorties comprenant chacun une sortie de données utiles et une sortie de données d'exploitation, les données disponibles sur les deux sorties d'un même couple de sorties étant des données utiles et des données d'exploitation reçues par la station terminale de réception sur un même canal normal et éventuellement sur le canal de secours,
**caractérisée en ce qu'**elle comprend :
- des moyens (34 ; 64, 64') de commutation des données multiplexées du canal de secours avec les données multiplexées de l'un des N canaux normaux, dit canal normal secouru ;
- - des moyens (37 ; 67, 67') de démultiplexage, sur chacun des N canaux normaux, des données utiles et des données d'exploitation, afin de les rendre disponibles sur l'un desdits N couples de sortie.

11. Système de communication comprenant une station relais (46 ; 71) permettant une transmission sécurisée de données, une station terminale d'émission selon la revendication 9 et une station terminale de réception selon la revendication 10, ledit système ayant au moins deux bonds de transmission, chaque bond de transmission étant réalisé sur N portions de canal normal, avec N > = 1, et au moins une portion de canal de secours,
ladite station relais recevant des données sur N portions entrantes de canal normal et au moins une portion entrante de canal de secours d'un bond de transmission précédent, et réémettant les données reçues sur N portions sortantes de canal normal et au moins une portion sortante de canal de secours d'un bond de transmission suivant,
**caractérisée en ce qu'**elle comprend :
- des moyens (74, 74') de commutation des données multiplexées de la portion entrante de canal de secours avec les données multiplexées de l'une des N portions entrantes de canal normal, de façon à obtenir lesdites N portions sortantes de canal normal ;
- des moyens (78) d'aiguillage des données multiplexées de l'une des N portions sortantes de canal normal vers la portion sortante de canal de secours.

## Claims

1. A method of transmitting data reliably over N normal channels, where N · 1, and over at least one back-up channel, between a transmit end station and a receive end station, the data transmitted comprising both traffic data and supervisory data;
said transmit end station (1; 21; 41; 51) being provided with N pairs of inputs, each pair comprising an input (22; 52, 52') for traffic data (23; 53, 53') and an input (24; 54, 54') for supervisory data (25; 55, 55'), the traffic data and the supervisory data applied to the respective inputs of the same pair of inputs being transmitted by the transmit end station over the same normal channel (27; 57, 57') and optionally over the back-up channel (210; 510);
said receive end station (2; 31; 42; 61) being provided with N pairs of outputs, each pair comprising an output (310; 610, 610') for traffic data (38; 68, 68') and an output (311; 611, 611') for supervisory data (39; 69, 69'), the data available at the respective outputs of the same pair of outputs being traffic data and supervisory data received by the receive end station over the same normal channel (27; 57, 57') and optionally over the back-up channel (210; 510);
said method being **characterized in that** the following successive steps are performed in said transmit end station (1; 21; 41; 51):
the traffic data and the supervisory data applied to each of the N pairs of inputs is multiplexed (81) on a respective one of the N normal channels; and
the multiplexed data from a "backed-up" one of the N normal channels is switched to the back-up channel;
and **in that** the following successive steps are performed in the receive end station (2; 31; 42; 61):
the multiplexed data from the back-up channel is interchanged (91) with the multiplexed data from the backed-up normal channel; and
the traffic data and the supervisory data on each of the N normal channels is demultiplexed (92) so a to make it available at a respective one of said N pairs of outputs.

2. A method according to claim 1, **characterized in that** said backed-up normal channel is the normal channel that has the poorest transmission quality.

3. A method according to claim 1 or 2, **characterized in that** said interchange step (91) performed in the receive end station consists in copying the multiplexed data from the back-up channel into said backed-up normal channel, only if the transmission quality of the back-up channel is better than that of the backed-up normal channel.

4. A method according to any one of claims 1 to 3, in which said reliable data-transmission is of the type having at least two transmission legs (47, 48) as a result of at least one relay station (46; 71) being used between the transmit end station (41) and the receive end station (42), each transmission leg being implemented over N normal channel portions (43₁, 44₁, 43₂, 44₂), where N · 1, and over at least one back-up channel portion (45₁, 45₂); and
in which each relay station receives data over N incoming normal channel portions (77, 77'), and over at least one incoming back-up channel portion (710) of a preceding transmission leg (47), and re-transmits the received data over N outgoing normal channel portions (87, 87') and over at least one outgoing back-up channel portion (810) of a following transmission leg (48);
said method being **characterized in that** the following successive steps are performed in said relay station (46; 71):
the multiplexed data from the incoming back-up channel portion is interchanged (101) with the multiplexed data from a "backed-up" one of the N incoming normal channel portions so as to obtain said N outgoing normal channel portions; and
the multiplexed data from a "backed-up" one of the N outgoing normal channel portions is switched (102) to the outgoing back-up channel portion.

5. A method according to claim 4, **characterized in that** said backed-up incoming normal channel portion is the incoming normal channel portion that has the poorest transmission quality.

6. A method according to claim 4 or 5, **characterized in that** said backed-up outgoing normal channel portion is the outgoing normal channel portion that has the poorest transmission quality.

7. A method according to any one of claims 4 to 6, **characterized in that** said interchange step (101) performed in the relay station consists in copying the multiplexed data from the incoming back-up channel portion into said backed-up incoming normal channel portion, only if the transmission quality of the incoming back-up channel portion is better than that of the backed-up incoming normal channel portion.

8. A method according to any one of claims 1 to 7, **characterized in that** said reliable data-transmission between the transmit end station and the receive end station is radio transmission.

9. A transmit end station (1; 21; 41; 51) of the type designed to co-operate with a receive end station in order to make it possible to transmit data reliably over N normal channels, where N · 1, and over at least one back-up channel, the data transmitted comprising both traffic data and supervisory data;
said transmit end station being provided with N pairs of inputs, each pair comprising a traffic data input and an supervisory data input, the traffic data and the supervisory data applied to the respective inputs of the same pair of inputs being transmitted by the transmit end station over the same normal channel and optionally over the back-up channel;
said transmit end station being **characterized in that** it includes:
multiplexing means (26; 56, 56') for multiplexing the traffic data and the supervisory data applied to each of the N pairs of inputs on a respective one of the N normal channels; and
switching means (28; 58) for switching the multiplexed data from a "backed-up" one of the N normal channels to the back-up channel.

10. A receive end station (2; 31; 42; 61) of the type designed to co-operate with a transmit end station in order to make it possible for data to be transmitted reliably over N normal channels, where N · 1, and over at least one back-up channel, the data transmitted comprising both traffic data and supervisory data;
said receive end station being provided with N pairs of outputs, each pair comprising a traffic data output and an supervisory data output, the data available at the respective outputs of the same pair of outputs being traffic data and supervisory data received by the receive end station over the same normal channel and optionally over the back-up channel;
said receive end station being **characterized in that** it includes:
interchange means (34; 64, 64') for interchanging multiplexed data from the back-up channel with multiplexed data from a "backed-up" one of the N normal channels; and
demultiplexing means (37; 67, 67') for demultiplexing traffic data and supervisory data from each of the N normal channels, so as to make the data available on a respective one of said N pairs of outputs.

11. A communications system comprising a relay station (46; 71) making it possible to perform reliable data-transmission, a transmit end station according to claim 9, and with a receive end station according to claim 10, said system having at least two transmission legs, each transmission leg being implemented over N normal channel portions, where N · 1, and over at least one back-up channel portion;
said relay station receiving the data over N incoming normal channel portions and over at least one incoming back-up channel portion of a preceding transmission leg, and re-transmitting the received data over N outgoing normal channel portions and over at least one outgoing back-up channel portion of a following transmission leg;
said relay station being **characterized in that** it includes:
interchange means (74, 74') for interchanging the multiplexed data from the incoming back-up channel portion with the multiplexed data from one of the N incoming normal channel portions, so as to obtain said N outgoing normal channel portions; and
switching means (78) for switching multiplexed data from one of the N outgoing normal channel portions to the outgoing back-up channel portion.

## Patentansprüche

1. Abgesichertes Verfahren zur Datenübertragung über N Normalkanäle (mit N≥1) und mindestens einen Reservekanal zwischen einer Sendeterminal-Station und einer Empfangsterminal-Station, wobei die übertragenen Daten einerseits Nutzdaten und andererseits Betriebsdaten beinhalten,
wobei die Sendeterminal-Station (1; 21; 41; 51) N Eingangspaare mit jeweils einem Eingang (22; 52, 52') für Nutzdaten (23; 53, 53') und einem Eingang (24; 54, 54') für Betriebsdaten (25; 55, 55') beinhaltet und die an den beiden Eingängen ein und desselben Eingangspaares anstehenden Nutzdaten und Betriebsdaten von der Sendeterminal-Station über ein und denselben Normalkanal (27; 57, 57') und gegebenenfalls den Reservekanal (210; 510) versandt werden,
wobei besagte Empfangsterminal-Station (2; 31; 42; 61) N Ausgangspaare mit jeweils einem Ausgang (310; 610, 610') für Nutzdaten (38; 68, 68') und einem Ausgang (311; 611, 611') für Betriebsdaten (39; 69, 69') beinhaltet und die an den beiden Ausgängen ein und desselben Ausgangspaares verfügbaren Daten Nutzdaten und Betriebsdaten sind, die von der Empfangsterminal-Station über ein und denselben Normalkanal (27; 57, 57') und gegebenenfalls den Reservekanal (210; 510) empfangen wurden,
**dadurch gekennzeichnet, daß** in besagter Sendeterminalstation (1; 21; 41; 51) nacheinander die folgenden Schritte durchgeführt werden,
- auf jedem der N Normalkanäle ein Multiplexsignal (81) aus den an jedem der N Eingangspaare anstehenden Nutzdaten und Betriebsdaten zu bilden und
- die Multiplexdaten eines der N Normalkanäle, der als abgesicherter Normalkanal bezeichnet wird, zum Reservekanal weiterzuleiten (82), ferner dadurch, daß in besagter Empfangsterminal-Station (2; 31; 42; 61) nacheinander die folgenden Schritte durchgeführt werden,
- zwischen den Multiplexdaten des Reservekanals und den Multiplexdaten des abgesicherten Normalkanals umzuschalten (91) und
- auf jedem der N Normalkanäle eine Demultiplexbildung der Nutzdaten und Betriebsdaten durchzuführen (92), um diese an einem der besagten N Ausgangspaare verfügbar zu machen.

2. Verfahren gemäß Anspruch 1, **dadurch gekennzeichnet, daß** besagter abgesicherter Normalkanal der Normalkanal ist, der die geringste Übertragungsqualität aufweist.

3. Verfahren gemäß einem oder beiden der Ansprüche 1 und 2, **dadurch gekennzeichnet, daß** der besagte in der Empfangsterminal-Station durchgeführte Schritt (91) zur Umschaltung darin besteht, die Multiplexdaten des Reservekanals nur dann in den abgesicherten Normalkanal zu kopieren, wenn die Übertragungsqualität des Reservekanals besser als die des abgesicherten Normalkanals ist.

4. Verfahren gemäß einem oder mehreren der Ansprüche 1 bis 3, wobei besagte abgesicherte Datenübertragung von der Art ist, bei welcher aufgrund der Verwendung mindestens einer Relaisstation (46, 71) zwischen der Sendeterminal-Station (41) und der Empfangsterminal-Station (42) mindestens zwei Übertragungs-Teilstrecken (47, 48) vorhanden sind, wobei jede Übertragungs-Teilstrecke auf N Abschnitten des Normalkanals (43₁, 44₁, 43₂, 44₂) mit N≥1 und mindestens einem Abschnitt des Reservekanals (45₁, 45₂) realisiert wird,
wobei jede Relaisstation Daten über N Eingangsabschnitte des Normalkanals (77, 77') und mindestens einen Eingangsabschnitt des Reservekanals (710) einer vorhergehenden Übertragungs-Teilstrecke (47) empfängt und die empfangenen Daten ihrerseits über N Ausgangsabschnitte des Normalkanals (87, 87') und mindestens einen Ausgangsabschnitt des Reservekanals (810) einer nachfolgenden Übertragungs-Teilstrecke (48) wieder versendet,
**dadurch gekennzeichnet, daß** in besagter Relaisstation (46; 71) nacheinander die folgenden Schritte durchgeführt werden,
- zwischen den Multiplexdaten des Eingangsabschnitts des Reservekanals und den Multiplexdaten eines der N Eingangsabschnitte des Normalkanals, der als abgesicherter Eingangsabschnitt des Normalkanals bezeichnet wird, so umzuschalten (101), daß sich besagte N Ausgangsabschnitte des Normalkanals ergeben, und
- die Multiplexdaten eines der N Ausgangsabschnitte des Normalkanals, der als abgesicherter Ausgangsabschnitt des Normalkanals bezeichnet wird, an den Ausgangsabschnitt des Reservekanals weiterzuleiten (102).

5. Verfahren gemäß Anspruch 4, **dadurch gekennzeichnet, daß** besagter abgesicherter Eingangsabschnitt des Normalkanals derjenige Eingangsabschnitt des Normalkanals ist, der die geringste Übertragungsqualität aufweist.

6. Verfahren gemäß einem oder beiden der Ansprüche 4 und 5, **dadurch gekennzeichnet, daß** besagter abgesicherter Ausgangsabschnitt des Normalkanals derjenige Ausgangsabschnitt des Normalkanals ist, der die geringste Übertragungsqualität aufweist.

7. Verfahren gemäß einem oder mehreren der Ansprüche 4 bis 6, **dadurch gekennzeichnet, daß** der besagte in der Relaisstation durchgeführte Schritt (101) zur Umschaltung darin besteht, die Multiplexdaten des Eingangsabschnitts des Reservekanals nur dann in den abgesicherten Eingangsabschnitt des Normalkanals zu kopieren, wenn die Übertragungsqualität des Eingangsabschnitts des Reservekanals besser als die des Eingangsabschnitts des Normalkanals ist.

8. Verfahren gemäß einem oder mehreren der Ansprüche 1 bis 7, **dadurch gekennzeichnet, daß** besagte abgesicherte Datenübertragung zwischen einer Sendeterminal-Station und einer Empfangsterminal-Station eine Übertragung per Funk ist.

9. Sendeterminal-Station (1; 21; 41; 51) der Art, die für das Zusammenwirken mit einer Empfangsterminal-Station vorgesehen ist, um eine abgesicherte Datenübertragung über N Normalkanäle (mit N≥1) und mindestens einen Reservekanal zu ermöglichen, wobei die übertragenen Daten einerseits aus Nutzdaten und andererseits aus Betriebsdaten bestehen,
wobei besagte Sendeterminal-Station N Eingangspaare mit jeweils einem Nutzdateneingang und einem Betriebsdateneingang beinhaltet und die Nutz- und Betriebsdaten von der Sendeterminal-Station über ein und denselben Normalkanal und gegebenenfalls über den Reservekanal übertragen werden,
**dadurch gekennzeichnet, daß** diese
- Vorrichtungen (26; 56, 56') zur Multiplexbildung aus den an einem der N Eingangspaare anstehenden Nutzdaten und Betriebsdaten auf jedem der N Normalkanäle sowie
- Vorrichtungen (28, 58) zum Weiterleiten der Multiplexdaten eines der Normalkanäle, der als abgesicherter Normalkanal bezeichnet wird, zum Reservekanal beinhaltet.

10. Empfangsterminal-Station (2; 31; 42; 61) der Art, die für das Zusammenwirken mit einer Sendeterminal-Station vorgesehen ist, um eine abgesicherte Datenübertragung über N Normalkanäle (mit N≥1) und mindestens einen Reservekanal zu ermöglichen, wobei die übertragenen Daten einerseits aus Nutzdaten und andererseits aus Betriebsdaten bestehen,
wobei besagte Empfangsterminal-Station N Eingangspaare mit jeweils einem Nutzdatenausgang und einem Betriebsdatenausgang beinhaltet und die an den beiden Ausgängen ein und desselben Ausgangspaares verfügbaren Daten Nutz- und Betriebsdaten sind, die von der Empfangsterminal-Station über ein und denselben Normalkanal und gegebenenfalls über den Reservekanal empfangen wurden,
**dadurch gekennzeichnet, daß** diese
- Vorrichtungen (34; 64, 64') zur Umschaltung zwischen den Multiplexdaten des Reservekanals und den Multiplexdaten eines der N Normalkanäle, der als abgesicherter Normalkanal bezeichnet wird, sowie
- Vorrichtungen (37; 67, 67') zur Demultiplexbildung der Nutzdaten und der Betriebsdaten auf einem der N Normalkanäle beinhaltet, um diese an einem der besagten N Ausgangspaare verfügbar zu machen.

11. Kommunikationssystem, beinhaltend eine Relaisstation (46, 71), welche eine abgesicherte Datenübertragung gestattet, ferner eine Sendeterminal-Station gemäß Anspruch 9 sowie eine Empfangsterminal-Station gemäß Anspruch 10, wobei besagtes System mindestens zwei Übertragungs-Teilstrecken aufweist, von denen jede auf N Abschnitten des Normalkanals (mit N≥1) und mindestens einem Abschnitt des Reservekanals realisiert ist,
wobei besagte Relaisstation Daten über N Eingangsabschnitte des Normalkanals und mindestens einen Abschnitt des Reservekanals einer vorhergehenden Übertragungs-Teilstrecke empfängt und die empfangenen Daten ihrerseits über N Ausgangsabschnitte des Normalkanals und mindestens einen Ausgangsabschnitc des Reservekanals einer nachfolgenden Übertragungs-Teilstrecke versendet,
**dadurch gekennzeichnet, daß** diese
- Vorrichtungen (74; 74') zur Umschaltung zwischen den Multiplexdaten des Eingangsabschnitts des Reservekanals und den Multiplexdaten eines der N Eingangsabschnitte des Normalkanals derart, daß sich besagte N Ausgangsabschnitt des Normalkanals ergeben, sowie
- Vorrichtungen (78) zum Weiterleiten der Multiplexdaten eines der N Ausgangsabschnitte des Normalkanals zum Ausgangsabschnitt des Reservekanals beinhaltet.
